(19) Europäisches Patentamt / European Patent Office / Office européen des brevets

(11) **EP 2 367 021 A1**

(12) **DEMANDE DE BREVET EUROPEEN**

(43) Date de publication:
**21.09.2011 Bulletin 2011/38**

(51) Int Cl.:
**G01S 13/76** (2006.01)

(21) Numéro de dépôt: **10156749.3**

(22) Date de dépôt: **17.03.2010**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA ME RS**

(71) Demandeur: **The Swatch Group Research and Development Ltd.**
**2074 Marin (CH)**

(72) Inventeur: **De Rosa, Luca**
**2013 Colombier (CH)**

(74) Mandataire: **Surmely, Gérard**
**ICB**
**Ingénieurs Conseils en Brevets SA**
**Faubourg de l'Hôpital 3**
**2001 Neuchâtel (CH)**

(54) **Procédé et système de localisation d'objets**

(57) L'invention concerne un procédé et un système de localisation d'objets au moyen de signaux UWB, le système comprenant un dispositif de recherche (D1), incorporé à un appareil portable (11) et pourvu d'une paire d'antennes (A1, A2), et au moins un dispositif cible (D2) attaché à un objet cherché (12). Le dispositif cible (D2) comporte, en plus de son émetteur-récepteur (34, 35), un récepteur de réveil (46) à très faible consommation qui, dans un état de veille du dispositif cible, peut recevoir un signal de réveil UWB pour mettre en service ce dispositif. Celui-ci est agencé pour mesurer une différence de temps (tdiff) entre les réceptions respectives d'un signal de localisation émis par les deux antennes (A1, A2) du dispositif de recherche et pour transmettre cette valeur dans un signal de retour contenant en outre une durée de traitement des signaux (tproc). Ainsi, une synchronisation des deux dispositifs n'est pas nécessaire. De préférence, le dispositif de recherche (D1) est incorporé à une montre-bracelet (11) dont deux aiguilles (51, 52) sont utilisées pour indiquer les directions possibles de l'objet cherché (12).

Fig. 1

EP 2 367 021 A1

## Description

Domaine technique de l'invention

La présente invention concerne un procédé de localisation d'un objet cherché au moyen de signaux électromagnétiques échangés entre un dispositif de recherche, incorporé à un appareil portable, et un dispositif cible attaché à l'objet cherché, le dispositif de recherche comportant un émetteur-récepteur associé à une paire d'antennes espacées l'une de l'autre, des moyens d'affichage, des moyens électroniques pour gérer l'émetteur-récepteur et les moyens d'affichage, et des moyens manuels de commande, le dispositif cible comportant un émetteur-récepteur associé à une antenne et à des moyens électroniques capables de détecter la réception de signaux provenant du dispositif de recherche et d'y répondre par des signaux représentant notamment l'identité du dispositif cible.

L'invention concerne également un système de localisation spécialement conçu pour la mise en oeuvre dudit procédé, ainsi qu'un dispositif de recherche faisant partie d'un tel système de localisation.

Arrière-plan technologique

Il arrive de perdre un objet d'usage courant, ou surtout d'oublier à quel endroit on l'a laissé alentour, par exemple dans une habitation ou un lieu de travail. Si l'objet est de petite taille, comme un trousseau de clés ou des lunettes, sa recherche peut être difficile et en tout cas fastidieuse. C'est pourquoi différents systèmes de localisation par transmission sans fil ont déjà été proposés. La présente invention prévoit d'utiliser la technologie sans fil UWB (ultra wide band) dans un tel système. Les principaux avantages de cette technologie dans la localisation d'objets à courte distance sont mentionnés dans la demande de brevet US 2006/0033662. Toutefois, jusqu'ici l'utilisation des signaux UWB dans ces applications devait se faire en combinaison avec des signaux en radiofréquences à bande étroite.

La demande de brevet US 2008/0136644 décrit en détail un système de recherche et localisation d'objets comportant des étiquettes d'identification qui contiennent à la fois des circuits RF à bande étroite et des circuits UWB. Ce système permet notamment de mesurer la distance entre un dispositif de recherche local et un objet cherché en utilisant la technologie UWB, en mesurant le temps de parcours aller-retour des signaux. Dans le document, il est précisé que la technologie UWB permet de mesurer des distances relativement courtes avec une précision suffisante pour localiser des objets, typiquement une précision de l'ordre du décimètre, voire du centimètre. Toutefois, le système proposé implique une construction assez complexe et nécessite en outre une opération de synchronisation entre le dispositif de recherche et les étiquettes lors de chaque recherche.

Un autre système utilisant des signaux UWB pour localiser un objet à courte distance est décrit dans la demande de brevet EP 1 630 966 et l'un de ses modes de réalisation présente les caractéristiques énoncées en préambule ci-dessus. Ce système est destiné principalement à la recherche d'une personne munie d'un terminal mobile, par exemple un téléphone, qui constitue l'objet cherché et le dispositif cible au sens de ce qui précède. Le procédé de recherche comprend deux phases successives. Dans la première, il s'agit de répondre à un appel d'urgence provenant par exemple du terminal mobile, par une localisation générale du terminal mobile, par exemple au moyen du GPS, et par l'envoi d'une équipe de secours sur place. La seconde phase est une localisation à courte distance, en général pour trouver des victimes, et utilise l'échange de signaux UWB entre le terminal mobile cherché et le dispositif de recherche en mains de l'équipe de secours, de la manière suivante.

Le terminal mobile émet ses signaux caractéristiques UWB sur commande, soit par pression manuelle sur une touche, soit automatiquement en réponse à une requête de localisation, envoyée par exemple par SMS, ou en réponse à la détection d'une situation dangereuse par le terminal lui-même. Pour localiser le terminal mobile au moyen de ses signaux UWB, le dispositif de recherche comporte quatre antennes disposées aux sommets d'un losange et associées par paires à une électronique qui mesure les différences de temps de réception du signal UWB dans chaque paire d'antennes. A partir de ces mesures, le dispositif de recherche calcule les coordonnées orthogonales du terminal mobile par rapport au référentiel défini par les quatre antennes, puis les coordonnées polaires (azimut et distance) et affiche ces dernières au moyen d'une aiguille et d'un affichage numérique.

Le système divulgué dans le document précité EP 1 630 966 n'est pas aisément applicable à la recherche d'objets perdus, parce que son terminal mobile, ne pouvant pas être activé manuellement dans un tel cas, devient trop compliqué pour se présenter comme une étiquette, par exemple, et avoir un mode de veille avec une consommation d'énergie quasi nulle. Un autre inconvénient résulte de la nécessité de quatre antennes placées aux sommets d'un losange, ce qui impose un volume relativement grand du dispositif de recherche.

Résumé de l'invention

La présente invention vise à fournir un procédé et un système de localisation d'objet qui permettent d'éviter substantiellement les inconvénients de l'art antérieur. Le dispositif cible devrait être réalisable sous une assez petite taille pour être associé discrètement à l'objet concerné, par exemple sous la forme d'une plaquette ou d'une étiquette collée. La mise en marche du dispositif cible pour répondre au dispositif de recherche devrait pouvoir se faire sans autre action que la réception de signaux provenant du dispositif de recherche. Un autre but de l'invention est de combiner le dispositif de recherche avec un appareil électronique portable dont il utilise certains composants, afin d'arriver à une miniaturisation poussée et de permettre à l'utilisateur d'avoir le dispositif de recherche constamment à sa disposition et de le porter sans subir de gêne.

Selon un premier aspect de l'invention, il est prévu un procédé de localisation tel que spécifié dans la revendication 1 ci-jointe. Les revendications dépendantes 2 à 6 définissent des modes de réalisation particuliers du procédé selon l'invention.

Selon d'autres aspects de l'invention, la revendication 7 définit un système de localisation d'objets pour la mise en oeuvre de ce procédé, tandis que la revendication 11 définit un dispositif de recherche pour la mise en oeuvre de ce procédé.

En combinant la transmission en UWB exclusivement et l'utilisation d'un signal de réveil UWB pour activer le dispositif cible, il devient possible de garder ce dernier en état de veille sur une très longue durée, typiquement plusieurs années, avec une faible quantité d'énergie électrique. Le dispositif cible, utilisant une seule bande de fréquence et une unique antenne UWB, peut être réalisé sous une forme bien plus réduite que selon l'art antérieur et être attaché à des objets de petite taille, comme un porte-clés, un portefeuille ou des lunettes. La consommation d'énergie du dispositif de recherche est aussi notablement réduite. En combinaison avec l'utilisation d'une seule paire d'antennes, de faible taille et éloignées de quelques centimètres seulement compte tenu de la fréquence très élevée des signaux UWB, cela permet d'incorporer le dispositif de recherche dans un appareil portable de petite taille.

Dans un mode de réalisation préféré, comme le lecteur pourra mieux le constater plus loin, l'invention permet avantageusement de loger le dispositif de recherche dans une boîte de montre-bracelet de taille normale et d'utiliser les organes d'affichage du temps pour indiquer la position de l'objet cherché. C'est ainsi que l'utilisateur, portant sa montre comme d'habitude, disposera immédiatement du dispositif de recherche quand il en aura besoin.

D'autres particularités et avantages de l'invention apparaîtront ci-dessous dans la description de divers modes de réalisation, présentés à titre d'exemples non limitatifs en référence aux dessins annexés.

Description sommaire des dessins

La figure 1 représente schématiquement deux éléments constituant la base du système de localisation, à savoir un dispositif de recherche D1 incorporé à un appareil portable et un dispositif cible D2 attaché à un objet cherché.

La figure 2 représente schématiquement le dispositif de recherche D1, incorporé à une montre-bracelet.

La figure 3 représente schématiquement différentes étapes du procédé de localisation, dans un mode opératoire avec translation du dispositif de recherche.

La figure 4 représente schématiquement des étapes successives du procédé de localisation, dans un mode opératoire avec rotation du dispositif de recherche.

La figure 5 représente schématiquement deux phases successives d'une séquence de localisation par échange de signaux UWB entre le dispositif de recherche et le dispositif cible.

La figure 6 est un schéma-bloc du dispositif de recherche D1.

La figure 7 est un schéma-bloc du dispositif cible D2.

La figure 8 est un schéma des étapes du fonctionnement du système des figures 1 à 7 pour une opération de localisation d'un objet.

La figure 9 représente schématiquement des étapes successives du procédé de localisation, dans une variante où le dispositif de recherche contient un accéléromètre.

Description détaillée de divers modes de réalisation

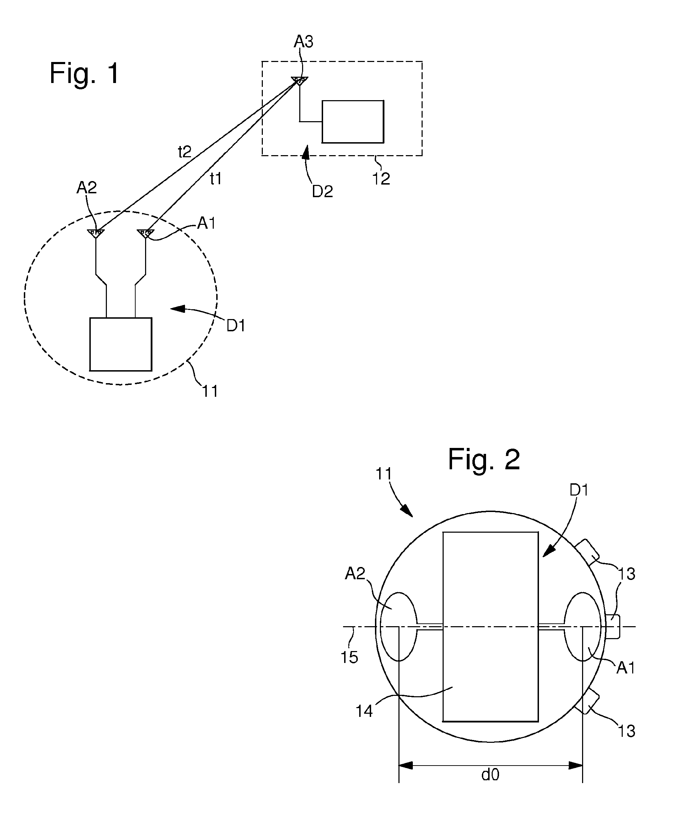

Le système de localisation d'objets représenté très schématiquement dans la figure 1 comprend un dispositif de recherche D1 et au moins un dispositif cible D2. Le dispositif de recherche D1 est incorporé à un appareil portable 11 et comporte un émetteur-récepteur en technologie UWB, doté de deux antennes A1 et A2. Le dispositif cible D2 est attaché à un objet 12, par exemple un trousseau de clés, et comporte un émetteur-récepteur en technologie UWB, doté d'une antenne A3. Le dessin montre en outre que dans la plupart des positions respectives des dispositifs D1 et D2, la distance entre les antennes A1 et A3 diffère de celle entre les antennes A2 et A3, donc les temps de parcours respectifs t1 et t2 des signaux UWB sur ces distances sont différents.

Dans le mode de réalisation préféré illustré par la figure 2, l'appareil portable 11 contenant le dispositif de recherche D1 est une montre électronique, en particulier une montre-bracelet, ayant des organes manuels de commande 13 tels que des poussoirs et/ou une tige de commande et/ou une glace tactile. L'ensemble électronique 14 du dispositif de recherche est logé à l'intérieur de la boîte étanche de la montre 11 et peut être alimenté par la même pile que la montre. Grâce à la fréquence très élevée (de l'ordre de 3,1 à 10 GHz) utilisée en UWB, la taille des antennes est très petite. On peut utiliser notamment des antennes du type coplanaire (microstrip). Les antennes A1 et A2 ont des emplacements diamétralement opposés, afin que leur écartement d0 mesuré le long de l'axe 15 passant par le point central de chacune des deux antennes soit aussi grand que possible. Selon le matériau constitutif de la boîte, les antennes pourront être logées avec les composants horlogers à l'intérieur de celle-ci. Une valeur de d0 comprise entre 3 et 4 cm environ est tout à fait compatible avec la taille habituelle d'une montre-bracelet et avec la précision nécessaire dans les mesures et calculs décrits plus loin. Comme on l'a dit plus haut, l'un des avantages de l'incorporation du dispositif de recherche D1 dans une montre est sa disponibilité permanente, puisque l'utilisateur porte généralement sa montre toute la journée. Un autre avantage réside dans la possibilité d'utiliser les organes d'affichages habituels d'une montre électronique pour les indications fournies par le dispositif de recherche, dans la mesure où la montre comporte un affichage analogique de l'heure, ce qui permet d'indiquer des directions au moyen des aiguilles. Un affichage numérique ou alphanumérique, prévu par exemple pour indiquer la date ou un temps chronométré, permet d'indiquer la distance de l'objet cherché, mais cette distance pourrait aussi être indiquée de manière analogique, par exemple au moyen d'une aiguille de compteur de chronographe. Ainsi, la synergie entre le dispositif de recherche et la montre-bracelet est très poussée puisque sont mis en commun le boîtier étanche, l'alimentation électrique, les moyens d'affichage, les moyens manuels de commande et le bracelet de fixation au poignet de l'utilisateur.

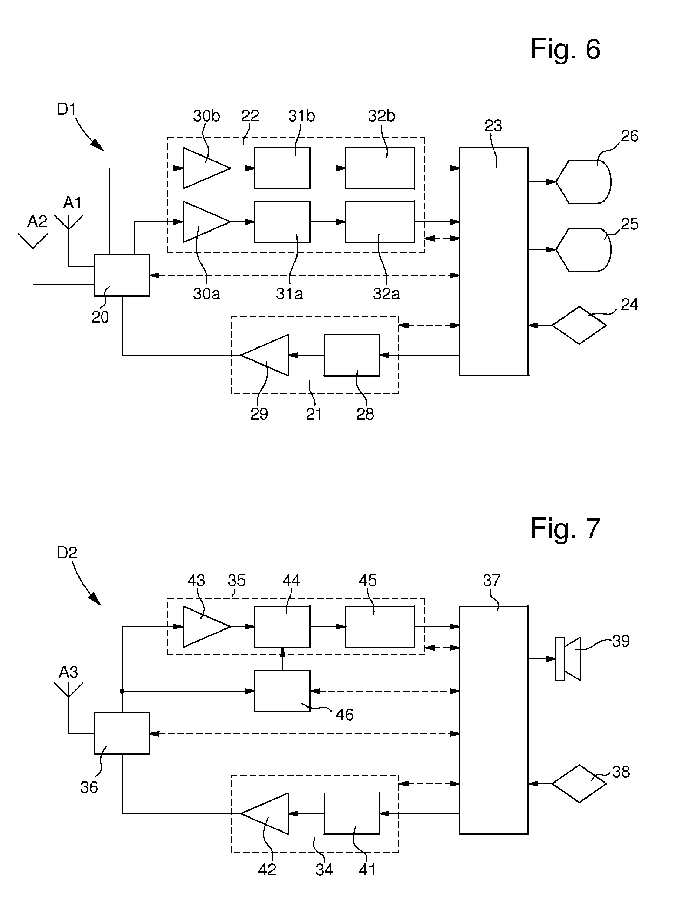

On se référera à la figure 6 pour décrire un mode de réalisation de l'ensemble électronique du dispositif de recherche D1. A travers un commutateur émission/réception 20, les antennes A1 et A2 sont connectées alternativement à un module émetteur UWB 21 et à un module récepteur UWB 22. Les modules 21 et 22 sont reliés à un module de traitement numérique 23, relié luimême à une touche d'entrée 24, à un affichage analogique 25 et à un affichage numérique 26, les affichages 25 et 26 servant aussi à afficher l'heure et d'autres valeurs temporelles dans la montre 11. La touche d'entrée 24 est une commande manuelle, par exemple actionnée par l'un des poussoirs 13 de la montre ou par la glace tactile.

Le module émetteur UWB 21 comporte un générateur d'impulsions UWB 28 et un amplificateur 29 dont le signal de sortie parvient simultanément aux deux antennes A1 et A2 à travers le commutateur 20. Le module récepteur UWB 22 comporte deux chaines parallèles recevant respectivement les signaux des antennes A1 et A2 et comprenant chacune un amplificateur 30a, 30b, un détecteur d'énergie 31 a, 31 b et un démodulateur 32a, 32b qui délivre son signal de sortie au module de traitement numérique 23. Celui-ci coordonne le fonctionnement des éléments 20, 21 et 22 grâce aux liaisons numériques dessinées en pointillés, effectue les opérations décrites plus loin pour calculer la position de l'objet cherché et commande les affichages 25 et 26 pour indiquer cette position.

En référence à la figure 7, l'ensemble électronique du dispositif cible D2 comporte un module émetteur UWB 34 et un module récepteur UWB 35 qui sont connectés alternativement à l'antenne A3 par un commutateur émission/réception 36. Les modules 34 et 35 sont reliés à un module de traitement numérique 37, relié luimême à une touche d'entrée 38 et, facultativement, à un transducteur acoustique 39. Le module émetteur UWB 34 comporte un générateur d'impulsions UWB 41 et un amplificateur 42 dont le signal de sortie parvient à l'antenne A3 à travers le commutateur 36. Le module récepteur UWB 35 comporte un amplificateur 43, un détecteur d'énergie 44 et un démodulateur 45 qui délivre son signal de sortie au module de traitement numérique 37. Celuici coordonne le fonctionnement des éléments 34, 35 et 36 par des signaux numériques sur les liaisons dessinées en pointillés, effectue les opérations décrites plus loin pour émettre des signaux UWB en réponse aux signaux reçus, et produit un signal avertisseur à diffuser par le transducteur acoustique 39 si celui-ci est présent.

Afin que D2 consomme très peu d'énergie à l'état de veille, il comporte un récepteur de réveil 46 qui reçoit également les signaux captés par l'antenne A3 et ne commande la mise en fonction du module récepteur 35 qu'après réception d'un signal de réveil codé. La structure et le fonctionnement d'un tel récepteur de réveil sont connus. Un exemple de réalisation est décrit dans l'article intitulé « A 2GHz 52μW Wake-Up Receiver With -72dBm Sensitivity Using Uncertain-IF Architecture », par N. Pletcher et al, 2008 IEEE International Solid-State Circuits Conference, Digest of Technical Papers, p. 524-525. La structure de base est très simple. Il s'agit d'un détecteur d'enveloppe calibré à la fréquence d'intérêt. Le signal de réveil reçu est un signal modulé en amplitude, avec une séquence d'informations (code) identifiant le dispositif à réveiller. Comme sa démodulation est très simple, elle est peu gourmande en énergie. L'alimentation avec une pile miniature permet de maintenir un tel récepteur en veille pendant une durée de plusieurs années, selon le cycle de service choisi (duty cycle).

Le module 37 comporte en outre une mémoire non volatile dans laquelle est enregistré le code représentant l'identité du dispositif cible D2, afin de le distinguer d'autres dispositifs cibles semblables D3, D4 etc. susceptibles d'être localisés au moyen du même dispositif de recherche D1. Ce code d'identité de D2 doit être enregistré dans une mémoire de D1 au cours d'une opération de déclaration, commandée par exemple par une combinaison d'actions sur la touche d'entrée 38, avant que le dispositif de recherche puisse être utilisé pour localiser ce dispositif cible. Il en va de même pour les codes d'identité des autres dispositifs cibles D3, D4 etc. que l'on voudrait ajouter au système, le cas échéant.

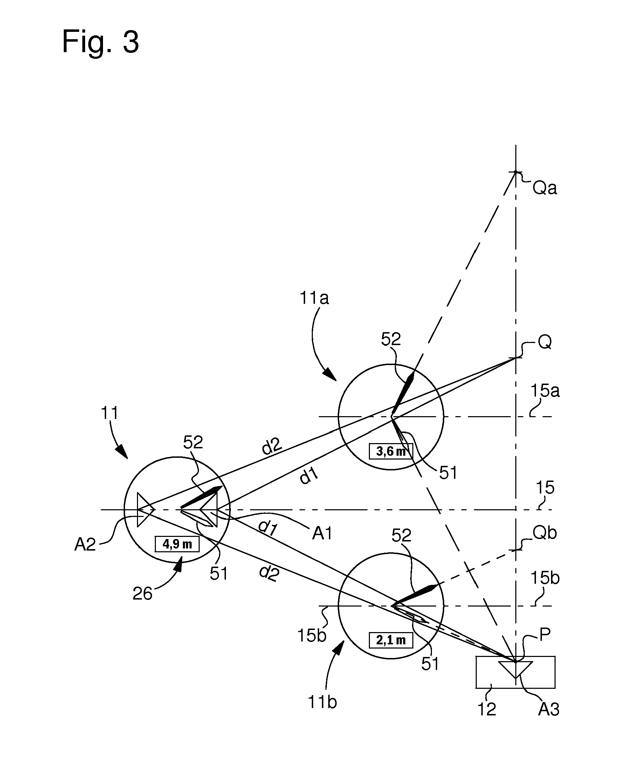

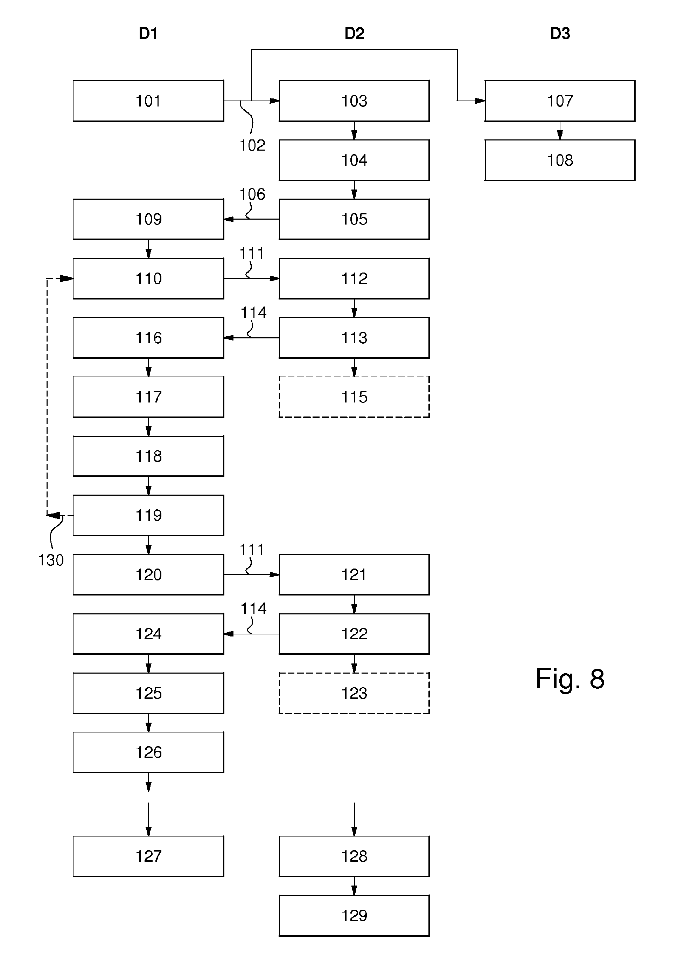

On décrira maintenant le fonctionnement du système pour localiser l'objet 12 lié au dispositif cible D2 en référence aux figures 3 à 8. Le schéma de la figure 8 représente les étapes opérationnelles effectuées dans ou par les dispositifs D1, D2 et D3 (si celui-ci est présent au voisinage) pour une opération de localisation de l'objet 12.

Dans la première étape 101, que l'utilisateur amorce par un actionnement approprié des organes de commande 13 (voir figure 2) de la montre 11, le dispositif de recherche D1 émet un signal de réveil 102 contenant le code d'identité du dispositif cible D2. Celui-ci reçoit et reconnaît le signal 102 dans l'étape 103 au moyen de son récepteur de réveil 46, qui met en service le reste de l'électronique de D2 dans l'étape 104. Dans l'étape 105, D2 émet un signal d'accusé de réception 106 qui contient aussi son code d'identité. Pendant ce temps, l'autre dispositif cible D3 a aussi reçu en 107 le signal de réveil 102 parce qu'il se trouvait assez près, mais son récepteur de réveil ne reconnaît pas son identité dans ce signal, donc D3 reste inactif en 108.

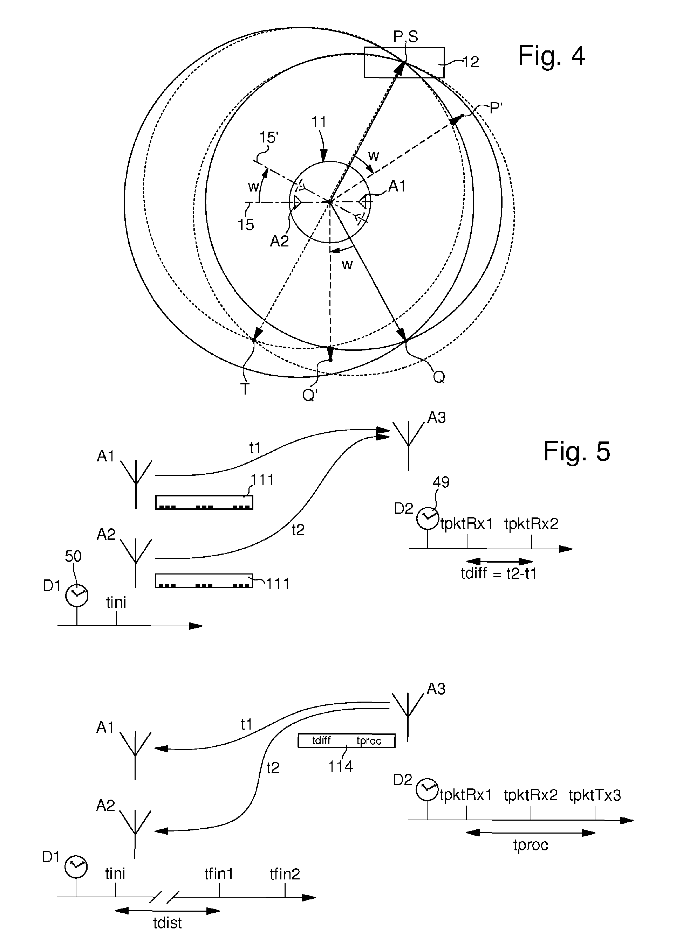

Le dispositif de recherche D1 reçoit le signal 106 dans l'étape 109 et commence alors une première séquence de localisation, par une étape 110 consistant à élaborer un signal de localisation 111, contenant aussi le code d'identité de D2, et l'émettre simultanément sur ses deux antennes A1 et A2 comme le montre la figure 5, à un instant tini qui commence un décompte du temps dans un circuit d'horloge 50 de D1. Admettons qu'à ce moment l'antenne A3 du dispositif cible soit plus proche de l'antenne A1 que de l'antenne A2, c'est-à-dire que le temps de parcours t1 du signal de localisation 111 entre A1 et A3 soit plus court que son temps de parcours t2 entre A2 et A3. Dans l'étape 112, le dispositif cible D2 reçoit le signal 111 en provenance de l'antenne A1, à un instant tpktRx1 (voir figure 5) qui initialise son circuit d'horloge 51, puis il reçoit le même signal 111 de l'antenne A2 à l'instant tpktRx2 et il mesure l'écart de temps tdiff = t2-t1 entre ces deux réceptions. Dans l'étape 113, D2 élabore et émet à l'instant tpktTx3 (voir figure 5) un signal de retour 114 qui contient l'écart de temps tdiff et une durée de traitement tproc qui est l'intervalle de temps entre tpktRx1 et tpktTx3. En option, D2 peut effectuer une étape 115 consistant à émettre un signal sonore via son transducteur acoustique 39, pour contribuer à localiser l'objet cherché grâce à l'ouïe si les conditions le permettent.

Dans l'étape 116, le dispositif de recherche D1 reçoit le signal de retour 114 en premier lieu à un instant tfin1 (voir figure 5) par son antenne A1 la plus proche de l'antenne A3. Cette réception actionne un interrupteur qui isole temporairement l'antenne A2 de son récepteur UWB, pour que celui-ci ne fonctionne pas à l'instant tfin2 où le même signal sera reçu par l'antenne A2, afin de réduire la consommation d'énergie de D1. Dans le module de traitement numérique 23 de D1, la valeur tdist = tfin1-tini est mesurée au moyen d'un circuit d'horloge.

Dans l'étape 117, le module 23 de D1 calcule les temps de parcours :

$$t1 = (tdist-tproc)/2$$

$$t2 = t1+tdiff$$

qui représentent les distances correspondantes d1 et d2 entre l'antenne A3 et chaque antenne A1 et A2. Ce module calcule ensuite, par triangulation dans le plan des trois antennes à partir des valeurs de d0, d1 et d2, les coordonnées polaires de la position ou des positions possibles de l'antenne A3 et donc de l'objet cherché 12 en référence à la montre et son axe 15, puis commande une indication visuelle correspondante par les moyens d'affichage 25 et 26 de la montre 11 dans l'étape 118. On notera que si t1>t2, il convient de permuter les indices 1 et 2 dans les formules ci-dessus.

En général, la valeur absolue de d2-d1 est inférieure à d0 et le calcul de triangulation susmentionné fournit deux positions possibles, symétriques par rapport à l'axe 15 et référencées P et Q dans la figure 3. Dans le présent exemple, les directions respectives de ces positions sont indiquées par l'aiguille des heures 51 et l'aiguille des minutes 52 de l'affichage analogique 25, tandis que leur distance commune (ici 4,9 m) est indiquée par l'affichage numérique 26. Il faut évidemment au moins une mesure additionnelle pour lever l'ambiguïté, après un mouvement imposé au dispositif de recherche D1 dans l'étape 119 pour l'amener dans une nouvelle position dans laquelle il procédera à ladite mesure. Par exemple dans la figure 3, la nouvelle position 11 a est atteinte par un mouvement de translation.

La figure 4 montre un mode de réalisation dudit mouvement sous forme d'une rotation limitée de la montre 11 dans le plan de son cadran afin de changer l'orientation de son axe de référence 15 sans translation, donc sans changer d'emplacement. Pour simplifier le dessin, la montre 11 est représentée seulement par sa paire d'antennes A1 et A2. Le référentiel du dessin est la terre. Les deux positions possibles de l'objet selon la première mesure sont indiquées par les points P et Q.

Après une rotation limitée w de la montre 11, par exemple dans le sens horaire, les nouvelles positions A1' et A2' des antennes définissent une nouvelle position 15' de leur axe de référence, si bien que les coordonnées mémorisées des points P et Q définissent des points P' et Q', décalés angulairement de w à partir de P et Q. Le dispositif D1 effectue alors une seconde séquence de localisation, comprenant des étapes 120 à 125 qui sont semblables aux étapes 110, 112, 113, 115, 116 et 117 de la première séquence, mais avec des calculs complémentaires dans l'étape 125. Cette séquence est enclenchée de préférence automatiquement, après un délai compris par exemple entre quelques dixièmes de seconde et quelques secondes après l'étape 117, mais on pourrait aussi envisager de le faire par commande manuelle. La position réelle de l'objet cherché 12 n'ayant pas changé sur la terre, le calcul de triangulation effectué dans D1 fournit en général comme précédemment deux positions possibles de l'objet cherché 12, indiquées ici par les points S et T. Celui qui représente la position de l'objet 12 est celui qui coïncide pratiquement avec P ou Q, donc S coïncidant avec P dans le cas de la figure 4. Dans le référentiel basé sur l'axe 15', D1 doit sélectionner dans l'étape 125 celui des points S et T qui est décalé angulairement de -w par rapport à P' et Q', respectivement. Il commande alors une indication visuelle de la position de l'objet cherché 12 par les moyens d'affichage de la montre dans l'étape 126, la direction de cette position étant indiquée par les deux aiguilles 51 et 52 superposées, tandis que la distance est indiquée par l'affichage numérique 26.

La discrimination entre S et T en fonction du sens du décalage angulaire de chaque point, respectivement à partir de P' et Q', nécessite que soit indiqué au dispositif de recherche D1 le sens de la rotation que la montre 11 subit entre les deux séquences de localisation. Une solution simple et économique consiste à prescrire le sens de cette rotation dans le mode d'emploi, par exemple le sens horaire. Autrement, on pourrait incorporer un gyroscope dans D1, mais cela impliquerait une complication relativement coûteuse et un surcroît de consommation d'énergie. Par contre, le gyroscope permettrait de maintenir la direction des aiguilles par rapport à l'environnement quand l'orientation de la montre change après la mesure.

Si pour une raison quelconque la discrimination entre S et T n'était pas possible, D1 pourrait enregistrer leurs coordonnées à la place de celles de P et Q, puis effectuer une nouvelle séquence de localisation à partir de l'étape 120. Par contre, quand l'affichage a été fait normalement dans l'étape 126, la recherche est réputée achevée et D1 s'arrête automatiquement en 127. Une commande de fin de recherche est effectuée dans le dispositif cible D2 dans une étape 128. Elle peut se faire automatiquement, par exemple par une temporisation, ou par une action manuelle sur la touche d'entrée 38. D2 se retrouve alors en 129 dans un état de veille où seul son récepteur de réveil est sous tension.

En variante, on peut prévoir un autre mode opératoire du dispositif de recherche D1, avec une répétition périodique de la séquence de localisation dans différentes positions successives de la montre 11, tandis que l'utilisateur interprète lui-même les mouvements des aiguilles de la montre par rapport à l'environnement. Il n'y a pas besoin d'exécuter les étapes 120 à 127. La répétition continue de la séquence de localisation est représentée de manière optionnelle par la flèche 130 dans la figure 8 et peut se faire, par exemple, à une cadence de l'ordre d'une demi-seconde à une seconde. La nouvelle séquence (étapes 110 à 118) écrase les données de positions mémorisées et conduit à afficher une nouvelle distance et (généralement) deux nouvelles directions possibles de l'objet cherché 12. Il incombe à l'utilisateur d'observer les mouvements des deux aiguilles et d'en déduire laquelle indique une position relativement constante dans l'espace : c'est cette direction qui correspond à la vraie position de l'objet cherché. Ainsi, il n'est pas indispensable que le dispositif de recherche soit agencé pour discriminer laquelle des deux directions est la bonne, puisque l'utilisateur peut le faire lui-même en observant l'évolution de l'affichage.

L'interprétation peut être facilitée lorsque l'utilisateur déplace la montre dans la direction d'une des aiguilles: si cette aiguille reste dans la même direction de l'espace, c'est que la montre va bien vers l'objet cherché. Ce mode opératoire est représenté dans la figure 3. Si l'utilisateur, partant de la position initiale de la montre 11, déplace celle-ci dans la direction de la grande aiguille 52 jusqu'en 11 a, la nouvelle séquence de localisation va déplacer les deux aiguilles, de sorte que la petite 51 pointe dans ce cas vers la position réelle P de l'objet 12 et la grande 52 vers le point Qa symétrique de P par rapport à la nouvelle situation 15a de l'axe de référence. Voyant que les deux aiguilles ont changé de direction, l'utilisateur doit en déduire que la translation n'a pas été faite dans la bonne direction. Si au contraire il déplace la montre dans la direction de la petite aiguille 51 de 11 à 11 b, cette aiguille pointant vers P ne change pas de direction et on en déduit que la translation est bien faite dans la direction de l'objet 12. Dans ce cas, la grande aiguille 52, pointant vers le point Qb symétrique de P par rapport à la position 15b de l'axe de référence, tourne seulement si l'orientation de cet axe change. Là aussi, l'utilisateur peut faire pivoter la montre jusqu'à ce que les deux aiguilles soient superposées. Il devra ensuite mettre fin aux itérations de localisation par une action manuelle sur les organes de commande de la montre.

Un mode opératoire analogue est applicable avec des mouvements de rotation sans translation. Dans l'exemple de la figure 4, la rotation dans le sens horaire a eu pour effet d'écarter les deux aiguilles, pour pointer vers S et T. Si au contraire l'utilisateur avait imposé une lente rotation dans le sens antihoraire, les deux aiguilles se seraient rapprochées graduellement au cours des séquences de localisation, jusqu'à ce qu'elles soient superposées, montrant ainsi la vraie direction de l'objet cherché 12.

Il importe de noter que le mode opératoire décrit ci-dessus n'est pas limité à des mouvements de pure rotation ou de pure translation de la montre, car il reste utilisable quand la montre effectue des combinaisons de translations et de rotations. Pour que l'utilisateur interprète correctement les mouvements des aiguilles, il suffit que le cadran de la montre reste approximativement dans un même plan, par exemple horizontal.

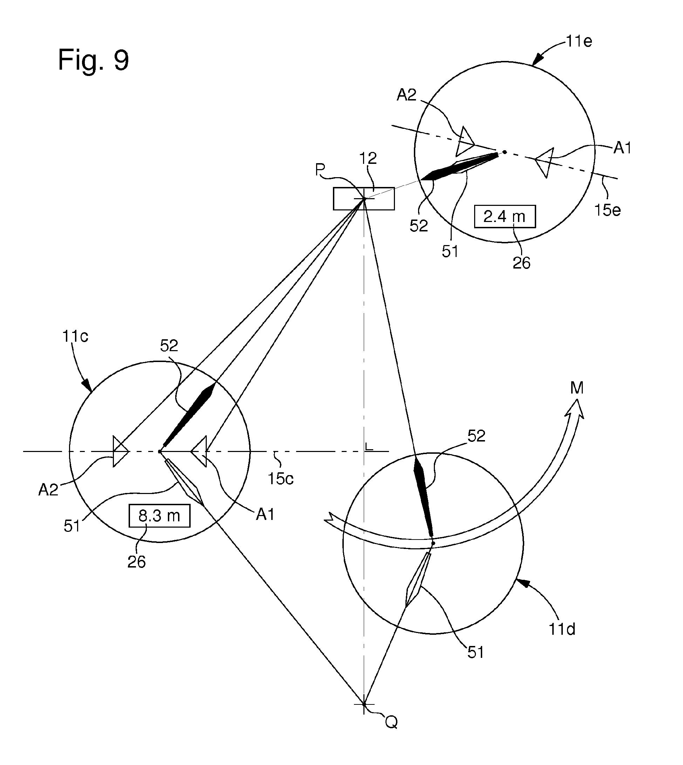

Selon un autre mode de réalisation du dispositif de recherche D1, qui n'est pas décrit en détail ici, celui-ci peut être pourvu d'une centrale inertielle comportant par exemple un accéléromètre à au moins deux axes et un gyroscope, afin de calculer les mouvements subis par la montre dans le plan du cadran, en général maintenu horizontal. Cela permet au dispositif, au moment d'une nouvelle séquence de localisation, de transformer les coordonnées des deux points mémorisés lors de la séquence précédente en coordonnées dans son référentiel déplacé et de les comparer à celles des deux nouveaux points afin de trouver lequel n'a pas bougé. Le mode opératoire d'un tel dispositif est illustré par la figure 9. Une première séquence de localisation avec la montre 11 immobile en position 11 c fournit les coordonnées des points P et Q dans le référentiel de la montre, P étant la position de l'antenne du dispositif cible D2 attaché à l'objet 12, tandis que Q est le point symétrique de P par rapport à la position 15c de l'axe de référence de la montre.

Pendant que l'utilisateur impose à la montre un mouvement M, le dispositif de recherche mesure périodiquement les composantes de ce mouvement au moyen de l'accéléromètre et du gyroscope, recalcule les coordonnées de P et Q par rapport à la nouvelle position de son référentiel et oriente en conséquence les aiguilles 51 et 52, comme on le voit dans la position intermédiaire 11 d. Une seconde séquence de localisation, analogue à celle décrite en référence à la figure 8, est ensuite lancée automatiquement ou manuellement dans une position quelconque 11 e de la montre. Elle permet au dispositif de recherche D1 de discriminer entre la position réelle P de l'objet 12 et celle de son image symétrique par rapport à la position actuelle 15e de l'axe de référence, et d'indiquer la direction de l'objet par superposition des deux aiguilles 51 et 52 tout en indiquant sa distance sur l'affichage numérique 26. L'utilisateur sait ainsi où se trouve l'objet cherché et peut, à son gré, poursuivre la recherche par UWB plus près ou y mettre fin.

La description qui précède montre que l'invention permet de réaliser un système de localisation s'intégrant à des appareils très peu encombrants, de sorte que les dispositifs cibles puissent être attachés discrètement aux objets à rechercher et qu'un utilisateur puisse aisément garder le dispositif de recherche avec lui en cas de besoin. Ce dernier n'est pas nécessairement combiné à une montre; on peut aussi envisager de l'incorporer à un appareil destiné seulement à cet usage ou à un autre appareil portable contenant une source d'énergie électrique, des circuits électroniques et des moyens d'affichage capables d'indiquer deux directions et une distance, par exemple un téléphone mobile ou un appareil nomade de positionnement par satellites.

## Revendications

1. Procédé de localisation d'un objet cherché (12) au moyen de signaux électromagnétiques échangés entre un dispositif de recherche (D1), incorporé à un appareil portable (11), et un dispositif cible (D2) attaché à l'objet cherché, le dispositif de recherche (D1) comportant un émetteur-récepteur associé à une paire d'antennes (A1 et A2) espacées l'une de l'autre, des moyens d'affichage, des moyens électroniques pour gérer l'émetteur-récepteur et les moyens d'affichage, et des moyens manuels de commande, le dispositif cible (D2) comportant un émetteur-récepteur associé à une antenne (A3) et à des moyens électroniques capables de détecter la réception de signaux provenant du dispositif de recherche et d'y répondre par des signaux représentant notamment l'identité du dispositif cible ;

ce procédé étant **caractérisé en ce que** lesdits signaux sont uniquement des signaux UWB et **en ce qu'**il comporte les phases successives suivantes :

- une phase de réveil dans laquelle le dispositif cible (D2) est activé par le dispositif de recherche au moyen d'un signal de réveil (102) contenant un code d'identité du dispositif cible et répond par un signal d'accusé de réception (106), et

- une phase de localisation comprenant au moins une séquence de localisation dans laquelle :

a) le dispositif de recherche (D1) émet simultanément sur ses deux antennes (A1, A2) un signal de localisation (111) contenant le code d'identité du dispositif cible (D2), le dispositif cible (D2) recevant le signal de localisation élabore et émet un signal de retour (114) contenant une indication de durée de traitement (tproc) entre la première réception du signal de localisation et l'émission du signal de retour;

b) une différence (tdiff) entre les temps de parcours respectifs (t1, t2) des signaux entre les deux antennes (A1, A2) du dispositif de recherche (D1) et le dispositif cible (D2) est mesurée;

c) le dispositif de recherche (D1) mesure un temps total (tdist) entre l'émission du signal de localisation (111) et la première réception du signal de retour (114) par l'une de ses antennes et calcule lesdits temps de parcours (t1, t2) sur la base dudit temps total (tdist), de ladite durée de traitement et de ladite différence (tdiff) entre les temps de parcours; et

d) le dispositif de recherche (D1) calcule la position ou les deux positions possibles (P, Q) de l'objet cherché (12) par triangulation, en se basant sur lesdits temps de parcours (t1, t2) et l'espacement (d0) entre ses deux antennes (A1, A2), et affiche la direction et la distance de ladite position ou des dites positions possibles.

2. Procédé selon la revendication 1, **caractérisé en ce que** ladite différence (tdiff) entre les temps de parcours est mesurée par le dispositif cible (D2) et transmise par celui-ci dans le signal de retour (114).

3. Procédé selon la revendication 1 ou 2, **caractérisé en ce que** la séquence de localisation est répétée périodiquement ou sur commande.

4. Procédé selon la revendication 3, caractérisé en ce l'on impose un mouvement au dispositif de recherche (D1) avant la répétition de la séquence de localisation et l'on observe l'évolution de l'affichage après ladite répétition.

5. Procédé selon la revendication 4, **caractérisé en ce que** ledit mouvement est une rotation du dispositif de recherche sur lui-même ou une translation dans la direction d'une des dites positions possibles.

6. Procédé selon la revendication 4, **caractérisé en ce que**, dans le dispositif de recherche (D1), les coordonnées des dites positions possibles (P, Q) fournies par la première séquence de localisation sont mémorisées, les mouvements (M) du dispositif de recherche sont mesurés, les coordonnées des dites positions possibles et leur affichage sont remis à jour en fonction des dits mouvements, et **en ce que** les positions possibles calculées lors d'une seconde étape de localisation sont comparées à celles de la séquence de localisation précédente pour effectuer un choix entre lesdites positions possibles.

7. Système de localisation d'objets pour la mise en oeuvre du procédé selon la revendication 1, comprenant un dispositif de recherche (D1), incorporé à un appareil portable (11), et au moins un dispositif cible (D2) attaché à un objet cherché (12) ; le dispositif de recherche (D1) comportant un émetteur-récepteur (21, 22) associé à une paire d'antennes (A1 et A2) espacées l'une de l'autre, des moyens d'affichage (25, 26) pour indiquer au moins une direction et une distance, des moyens électroniques (23) pour gérer l'émetteur-récepteur et les moyens d'affichage, et des moyens manuels de commande (24) ; le dispositif cible (D2) comportant un émetteur-récepteur (34, 35) associé à une antenne (A3) et à des moyens électroniques (37) capables de détecter la réception de signaux provenant du dispositif de recherche et d'y répondre par des signaux représentant notamment l'identité du dispositif cible ; ce système étant **caractérisé en ce que** les signaux échangés entre le dispositif de recherche (D1) et le dispositif cible (D2) sont des signaux UWB ; **en ce que** le dispositif cible (D2) comporte, en plus dudit émetteur-récepteur (34, 35), un récepteur de réveil (46) agencé pour recevoir et décoder un signal de réveil UWB dans un état de veille du dispositif cible et, lorsque le signal de réveil contient le code d'identité du dispositif cible, mettre en service ledit émetteur-récepteur (34, 35) ; et **en ce que** les moyens d'affichage du dispositif de recherche (D1) comportent deux aiguilles (51, 52), capables d'indiquer ensemble deux directions simultanément ou une seule direction en étant superposées.

8. Système selon la revendication 7, **caractérisé en ce que** le dispositif cible (D2) est agencé pour mesurer une différence de temps (tdiff) entre les réceptions respectives d'un signal émis par les deux antennes (A1, A2) du dispositif de recherche et pour incorporer une représentation de cette différence de temps dans un signal de retour (114).

9. Système selon la revendication 7 ou 8, **caractérisé en ce que** ledit appareil portable est une montre électronique (11) ayant un affichage analogique du temps (25) dont deux aiguilles (51, 52) sont utilisées par le dispositif de recherche pour indiquer lesdites directions.

10. Système selon la revendication 9, **caractérisé en ce que** la montre comporte un affichage numérique (26) apte à une indication temporelle et utilisé par le dispositif de recherche pour indiquer ladite distance.

11. Dispositif de recherche (D1) pour la mise en oeuvre du procédé de localisation d'objets selon la revendication 1, comportant un émetteur-récepteur (21, 22) associé à une paire d'antennes (A1 et A2) espacées l'une de l'autre, des moyens d'affichage (25, 26) pour indiquer une direction et une distance, des moyens électroniques (23) pour gérer l'émetteur-récepteur et les moyens d'affichage, et des moyens manuels de commande (24) ; ce dispositif étant **caractérisé en ce que** l'émetteur-récepteur (21, 22) est un émetteur-récepteur UWB et **en ce que** ses moyens d'affichage comportent deux aiguilles (51, 52) capables d'indiquer ensemble deux directions simultanément ou une seule direction en étant superposées.

12. Dispositif de recherche selon la revendication 11, **caractérisé en ce qu'**il est incorporé dans une montre électronique (11) ayant un affichage analogique du temps (25) dont deux aiguilles (51, 52) sont utilisées par ce dispositif de recherche pour indiquer lesdites directions.

13. Dispositif de recherche selon la revendication 12, **caractérisé en ce que** la montre comporte un affichage numérique (26) apte à une indication temporelle et utilisé par le dispositif de recherche pour indiquer ladite distance.

Fig. 1

A3

t2

t1

D2

12

A2

A1

D1

11

Fig. 2

11

D1

A2

13

15

A1

14

13

d0

# Fig. 3

Fig. 4

Fig. 5

Fig. 6

Fig. 7

**D1**

**D2**

**D3**

Fig. 8

Fig. 9

Europäisches
Patentamt

European
Patent Office

Office européen
des brevets

**RAPPORT DE RECHERCHE EUROPEENNE**

Numéro de la demande

EP 10 15 6749

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2006/098791 A2 (MANN ALFRED E FOUND SCIENT RES [US]; KARR LAWRENCE J [US]) 21 septembre 2006 (2006-09-21) * page 2, ligne 6 - page 13, ligne 6 * * figure 1A * ----- | 1-8,11 | INV. G01S13/76 |
| A | US 2003/034887 A1 (CRABTREE TIMOTHY L [US] ET AL CRABTREE TIMOTHY L [US] ET AL) 20 février 2003 (2003-02-20) * alinéas [0011], [0 13], [0 17], [0 28] * * revendication 68 * ----- | 1-13 | |
| A | US 2006/033662 A1 (WARD ANDREW M R [GB] ET AL WARD ANDREW MARTIN ROBERT [GB] ET AL) 16 février 2006 (2006-02-16) * alinéa [0001] * ----- | 1-13 | |
| A | PLETCHER N M ET AL: "A 2GHz 52 Î 1/4 W Wake-Up Receiver with -72dBm Sensitivity Using Uncertain-IF Architecture" SOLID-STATE CIRCUITS CONFERENCE, 2008. ISSCC 2008. DIGEST OF TECHNICAL PAPERS. IEEE INTERNATIONAL, IEEE, PISCATAWAY, NJ, USA, 3 février 2008 (2008-02-03), pages 524-633, XP031440532 ISBN: 978-1-4244-2010-0 * page 1 * ----- | 1-13 | **DOMAINES TECHNIQUES RECHERCHES (IPC)** G01S |
| A | DE 102 37 605 A1 (KOSTAL LEOPOLD GMBH & CO KG [DE]) 4 mars 2004 (2004-03-04) * alinéa [0003] * ----- | 1-13 | |
| A | WO 2009/040699 A1 (NXP BV [NL]; MUEHLMANN ULRICH [AT]) 2 avril 2009 (2009-04-02) * page 5, ligne 13 - page 8, ligne 1 * ----- | 1-13 | |

Le présent rapport a été établi pour toutes les revendications

| Lieu de la recherche | Date d'achèvement de la recherche | Examinateur |
|---|---|---|
| La Haye | 8 septembre 2010 | Van den Bosch, I |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 15 6749

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-09-2010

| Document brevet cité au rapport de recherche | Date de publication | Membre(s) de la famille de brevet(s) | Date de publication |
|---|---|---|---|
| WO 2006098791 A2 | 21-09-2006 | AU 2005329042 A1<br>CA 2600708 A1<br>EP 1869728 A2<br>US 2008165059 A1 | 21-09-2006<br>21-09-2006<br>26-12-2007<br>10-07-2008 |
| US 2003034887 A1 | 20-02-2003 | US 2005007251 A1 | 13-01-2005 |
| US 2006033662 A1 | 16-02-2006 | US 2010001905 A1 | 07-01-2010 |
| DE 10237605 A1 | 04-03-2004 | AU 2003303738 A1<br>WO 2004077087 A2<br>EP 1529222 A2 | 17-09-2004<br>10-09-2004<br>11-05-2005 |
| WO 2009040699 A1 | 02-04-2009 | CN 101809587 A<br>EP 2195763 A1<br>US 2010207733 A1 | 18-08-2010<br>16-06-2010<br>19-08-2010 |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060033662 A
- US 20080136644 A
- EP 1630966 A

**Littérature non-brevet citée dans la description**

- **N. PLETCHER et al.** A 2GHz 52µW Wake-Up Receiver With -72dBm Sensitivity Using Uncertain-IF Architecture. *IEEE International Solid-State Circuits Conference, Digest of Technical Papers,* 2008, 524-525